(19) Europäisches Patentamt
European Patent Office
Office européen des brevets

(11) **EP 4 307 138 A1**

(12) **EUROPEAN PATENT APPLICATION**

(43) Date of publication:
**17.01.2024 Bulletin 2024/03**

(21) Application number: **23184654.4**

(22) Date of filing: **11.07.2023**

(51) International Patent Classification (IPC):
**G06F 17/14** (2006.01)     **G06F 9/38** (2018.01)

(52) Cooperative Patent Classification (CPC):
**G06F 17/142; G06F 9/3887**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.07.2022 US 202217864553**

(71) Applicant: **NXP USA, Inc.**
**Austin TX 78735 (US)**

(72) Inventors:
• **Mundarath, Jayakrishnan Cheriyath**
**5656AG Eindhoven (NL)**
• **Traylor, Kevin Bruce**
**5656AG Eindhoven (NL)**

(74) Representative: **Krott, Michel**
**NXP Semiconductors**
**Intellectual Property Group**
**High Tech Campus 60**
**5656 AG  Eindhoven (NL)**

(54) **SELF-ORDERING FAST FOURIER TRANSFORM FOR SINGLE INSTRUCTION MULTIPLE DATA ENGINES**

(57)     A method for self-ordering Fast Fourier Transform for Single Instruction Multiple Data engines includes performing a butterfly operation on a first input vector and a second input vector to generate a first output vector and a second output vector, wherein the first input vector, the second input vector, the first output vector and the second output vector are each comprised of complex numbers, and a first order of the complex numbers of the first output vector is non-linear and a second order of the complex numbers of the second output vector is non-linear. A combination of complex numbers is reordered and exchanged between the first output vector and the second output vector to partially linearize the first order of the first output vector and to partially linearize the second order of the second output vector.

FIG. 1

**Description**

**FIELD**

This disclosure relates generally to Fast Fourier Transforms (FFT), and more specifically to a self-ordering FFT, which eliminates vector memory access to non-contiguous elements.

**BACKGROUND**

Radix-2 Discrete Fourier Transforms (DFT) are one of the most commonly used signal processing algorithms spanning a plethora of application domains. For radix-2 sizes, that is for DFT sizes that are powers of 2, the most commonly used implementation is based on the Cooley-Tukey Fast Fourier Transform algorithm. The FFT algorithm for N point data has a complexity of the order of $Nlog2(N)$ in contrast to the order of $N^2$ complexity needed for the DFT. An in-place decimation-in-frequency (DIF) version takes FFT inputs in linear order and produces them in bit-reversed order. Thus, there is a need to undo the bit-reversal (or, bit-reverse the outputs again since the bit-reversal is a symmetric operation) to retrieve the FFT outputs in their original linear order.

Single instruction multiple data (SIMD) based Digital Signal Processor (DSP) architectures are very popular since they provide high computational powers at high efficiencies. Efficiencies are typically quantified in terms of power/FLOP or area/FLOP. SIMD engines derive their efficiencies by using wide data buses for efficient memory transfers and by executing the same numerical operation on a parallel set of Arithmetic Units (AUs) (e.g., an operation on a vector data driven by a single instruction).

A conventional in-place implementation of a DIF-FFT on a SIMD engine requires hardware support for multiple levels of special source data and writeback multiplexing. Finally, the outputs are bit-reversed so they need to be reordered to enable downstream vectorized operations on the SIMD processor.

To achieve SIMD efficiency, memory accesses are streamlined so that a wide data bus fetches/writes data from continuous locations in memory commensurate with the size of the vector data path. For an N point FFT with data bus width W, the theoretical number of data accesses for N point FFT implementation is given by $N/W*log2(N)*2$, where the last factor of 2 is accounting for the loads and stores.

**BRIEF DESCRIPTION OF THE DRAWINGS**

The present invention is illustrated by way of example and is not limited by the accompanying figures, in which like references indicate similar elements. Elements in the figures are illustrated for simplicity and clarity and have not necessarily been drawn to scale.

FIG. 1 is a functional block view of a system for a self-ordering FFT for SIMD engines, in accordance with example embodiments of the present disclosure.

FIG. 2 is flowchart representation of an example embodiment of an FFT.

FIG. 3 is a graphical view of a Straight-Mode for permuting a plurality of elements of an FFT, in accordance with example embodiments of the present disclosure.

FIG. 4 is a graphical view of a BR_Straight-Mode for permuting a plurality of elements of an FFT, in accordance with example embodiments of the present disclosure.

FIG. 5 is a graphical view of an MbyL-Mode for permuting a plurality of elements of an FFT, in accordance with example embodiments of the present disclosure.

FIG. 6 is a graphical view of a BR_MbyL-Mode for permuting a plurality of elements of an FFT, in accordance with example embodiments of the present disclosure.

FIG. 7 is a functional block view of a system for Twiddle Factor (TWF) generation, in accordance with example embodiments of the present disclosure.

FIG. 8 is a graphical view of the initial setup parameters of a method for a self-ordering FFT for SIMD engines, in accordance with example embodiments of the present disclosure.

FIG. 9 is a graphical view of the first stages of a method for a self-ordering FFT for SIMD engines, wherein an N number (N) is greater than an M number (M) in accordance with example embodiments of the present disclosure.

FIG. 10 is a graphical view of the second stages of a method for a self-ordering FFT for SIMD engines, wherein N is greater than M in accordance with example embodiments of the present disclosure.

FIG. 11 is a graphical view of the last stage of a method for a self-ordering FFT for SIMD engines, wherein N is greater than M in accordance with example embodiments of the present disclosure.

FIG. 12 is a graphical view of the first stages of a method for a self-ordering FFT for SIMD engines, wherein N is less than or equal to M in accordance with example embodiments of the present disclosure.

FIG. 13 is a graphical view of the last stage of a method for a self-ordering FFT for SIMD engines, wherein N is less than or equal to M and N is greater than 4 in accordance with example embodiments of the present disclosure.

FIG. 14 is a graphical view of the last stage of a method for a self-ordering FFT for SIMD engines, wherein N is less than or equal to M and N is less than or equal to 4 in accordance with example embodiments of the present disclosure.

FIG. 15 is a flowchart representation of a method for a self-ordering FFT for SIMD engines, in accordance with an embodiment of the present disclosure.

FIG. 16 is a flowchart representation of another method for a self-ordering FFT for SIMD engines, in accordance with an embodiment of the present disclosure.

FIG. 17 is a flowchart representation of another method for a self-ordering FFT for SIMD engines, in accordance with an embodiment of the present disclosure.

## DETAILED DESCRIPTION

Embodiments described herein provide for the automatic undoing of the bit-reversed ordering of the FFT by enabling incremental intra-vector permutations at each stage of an FFT thereby avoiding the need for accessing a vector memory in sets of non-contiguous elements at any stage of the FFT operation. Bit reversed ordering is a consequence of the pattern of butterfly operations inherent in each stage of the DIF FFT algorithm. This automatic vector reordering is particularly beneficial when used with SIMD engines (e.g., processors) due to the substantial savings in power consumption and reduced computational overhead by reducing wide data width accesses to memory. The term "SOS-FFT" is used to describe a Self-Ordering SIMD based FFT as described in the embodiments of this disclosure. The term "bit-reversed reordering" as used throughout this disclosure, refers to the reordering of indexed elements within an array or vector of multiple elements. In some embodiments, each element is a complex number. Each complex number may have a data width (e.g., 8-bit, 16-bit or 32-bit) chosen in part by data width of a SIMD processor used to implement the FFT operation. In the embodiments described herein, bit reversed reordering is achieved by enabling some specific patterns of permutations of the output vectors at each stage of the FFT and is accomplished through write back multiplexers ("MUXes") controlled through a combination of various write back modes, thereby providing a final FFT output with a linear ordering of elements without incurring any vector memory access overhead.

A DIF-FFT has log2(N) stages with N/2 radix-2 butterflies in each stage. A radix-2 butterfly in each stage is defined by the following operation:

$$y(n1) = x(n1) + x(n2) \qquad [1]$$

$$y(n2) = w_{n1}*x(n1) - w_{n1}*x(n2) \qquad [2]$$

where $x(\ )$ represents the outputs of the previous stage and $y(\ )$ represents the output of the current stage, and $wn1(\ )$ represents a TWF (twiddle factor which is derived from a complex exponential sequence). Assuming an in-place operation (e.g., the output indices are the same as input indices for any butterfly), the indices $n1$ and $n2$ are separated by N/2 in first stage, N/4 in second stage, N/8 in third stage and so on till a separation of 1 in the final stage. SIMD cores vectorize the operations of each stage by operating on sets of M contiguous $n1$ and $n2$ indices. The term "M" (e.g., M number) as used herein is the number of complex numbers or elements that can be loaded by a source register and also quantifies the number of radix2 butterflies than be performed in each clock by a SIMD engine. The term "N" (e.g., N number) is the FFT size. The term "W" is a bus width of the memory used to store and retrieve data from the SIMD processor. The term "L" is equal to W/M and represents the number of M-element vectors that can be fetched from memory for each fetch or store operation. Some specialized hardware handling is required for the final stages of the FFT when the separation between $n1$ and $n2$ is less than or equal to M. As will be appreciated for each stage, N elements need to be read and N elements need to written. So given a memory access width of W elements, N/W vectorized reads and N/W vectorized stores are required at each stage.

The SOS-FFT relies upon "intra-vector" reordering at each stage of the FFT. For example, the SOS-FFT algorithm reads 2 "vectors" of contiguous data for the butterfly operations and permutes them when writing them back. The write back re-ordering is handled by specialized MUXes on the vector data path within the AU and is simple and cost effective in hardware implementation terms. A key aspect of the SOS-FFT is that memory is always accessed as "contiguous vectors" and the writeback MUXes are always "intra", implying that the outputs of a vector butterfly operation do not write out to any other locations other than contained within the current output vectors. The SOS-FFT is not an in-place design, in that a "scratch memory" of size N is required in addition to an N element input/output memory. However, considering that any design that requires a bit-reversal operation following an in-place FFT, the total memory requirement is the same with SOS-FFT as is with an in-place FFT implementation.

After each vectorized butterfly, the output vector is reordered, (local to the current output vector). A scratch memory and the output memories are used to store intermediate results between stages in a toggle fashion such that the final stage output is written on to the output buffer. After executing log2(N) stages of the SOS-FFT the per stage intra-vector permutations ensure that the final output is bit-reversed. For a SIMD engine with a vector path capable of supporting M butterflies per cycle, the computational time of the SOS-FFT operation is N*log2(N)/(2*M) clock cycles (e.g., equal to the processing time of the FFT which implies that the reordering operation carries no processing time overhead).

If the N bit reversed indices of the output vector of the DIF-FFT operation is partitioned into K contiguous groups each containing M indices, the difference between any pair of indices in any group is an integer multiple of K. Within each such group, the M sorted (ascending) element indices are ordered in a M bit-reversed order. For example, if N = 8 elements, and the N elements are partitioned into 2 consecutive groups, (e.g., K =2), the 8 indices (indexed elements) [0, 1, 2, 3, 4, 5, 6, 7)] are bit reversed with the butterfly operation to generate [0, 4, 2, 6, 1, 5, 3, 7]. If we partition this into 2 consecutive groups, we get the two groups [0, 4, 2, 6] and [1, 5, 3, 7]. The absolute difference between each pair of indices within either group is an integer multiple of K=2. This implies that for a SIMD style operation handling butterflies between 2 sets of M contiguous samples, each operation will encounter sample indices within the final group as a part of either of the butterfly outputs within the first log2(M) stages. Final bit-reversal is done as a part of intra group writeback. This principle is used to design log2(M)+1 special writeback MUXes for the SOS-FFT controlled by one or more MUX modes including a Straight-Mode, a BR_Straight-Mode, an MbyL-Mode and a BR_MbyL-Mode, described in more detail below.

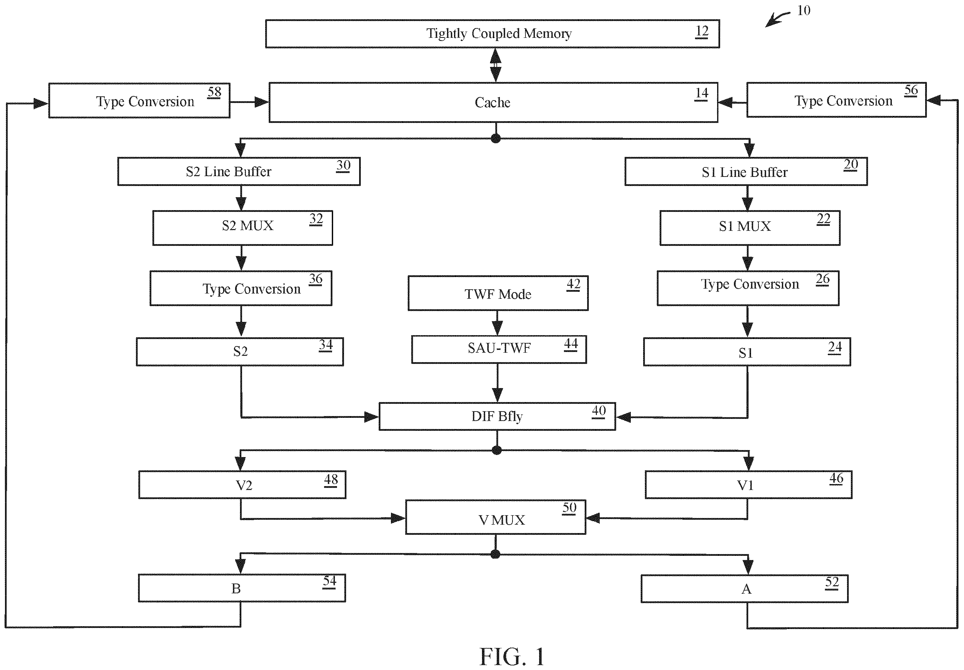

FIG. 1 shows an embodiment 10 of a system for self-ordering FFT for SIMD engines (e.g., SOS-FFT). The embodiment 10 includes a Tightly Coupled Memory (TCM) 12 providing low latency and wide data bus access to a cache 14. In some embodiments, the cache 14 is replaced with a register file.

A vector data path fed from the cache 14 includes a first line buffer 20, which loads a full line of data of width W from the cache 14. A first MUX 22 multiplexes a vector of complex numbers or elements of width M from the first line buffer, to load a first storage (S1) 24, in accordance with a MUX mode (e.g., Straight-Mode). In some embodiments, a type conversion 26 converts data from the first MUX 22 to a format required by the first storage 24 (e.g., converting an 8-bit, 16-bit or 32-bit data).

Another vector data path from the cache 14 includes a second line buffer 30, which loads a full line of data of width W from the cache 14. A second MUX 32 multiplexes a vector of complex numbers or elements of width M from the first line buffer, to load a second storage (S2) 34, in accordance with a MUX mode (e.g., Straight-Mode). In some embodiments, a type conversion 36 converts data from the second MUX 32 to a format required by the second storage 34 (e.g., converting an 8-bit, 16-bit or 32-bit data). In an embodiment, the first storage 24 and the second storage 34 are both source register memories. In another embodiment, the first storage 24 and the second storage 34 are both cache memories. References to "source register" as applied to S1 24 and S2 34 throughout this disclosure should be considered to also apply to a cached memory implementation for S1 24 and S2 34 in an alternate embodiment.

A DIF butterfly 40 performs a butterfly transformation on at least one pair of elements read from S1 24 and S2 34 in accordance with equations [1] and [2] described above, wherein $x(n1)$ and $x(n2)$ correspond to the outputs of S1 24 and S2 34, and $y(n1)$ and $y(n2)$ correspond to V1 46 and V2 48. The butterfly 40 uses a TWF generated by a TWF mode 42, which controls a Special Arithmetic Unit (SAU) TWF generator 44. The SAU-TWF 44 includes a numerically controlled oscillator unit that can generate complex exponential sequences (e.g., TWFs). A pair of output vectors V1 46 and V2 48 are generated by the DIF Bfly 40. A vector multiplexer V MUX 50 permutes V1 46 and V2 48 in accordance with a write back MUX mode (e.g., Straight-Mode, BR_Straight-Mode, MbyL-Mode or a BR_MbyL-Mode), to undo the bit reversal inherent in the butterfly operation performed by the DIF Bfly 40. The V MUX 50 thereby generates re-ordered versions of the vectors V1 46 and V2 48, stored in A 52 and B 54 respectively in accordance with the different writeback modes referenced above. In one embodiment, the vectors from A 52 and B 54 are written back into the cache 14 for processing by a subsequent stage of the FFT or stored as the result of the last stage of the FFT. In another embodiment, the respective outputs of A 52 and B 54 are converted by type conversion 56 and 58 respectively prior to being stored in the cache 14. The operation of type converters 56 and 58 is similar to the type converters 26 and 36 previously described. In some embodiments, data stored in the cache 14 is subsequently transferred to the TCM 12. The TCM 12 may include the scratch memory, output memory, vector memory and the like. As a consequence of the cumulative writeback MUX operations, the SOS-FFT generates a final FFT output wherein the elements are in linear order thereby undoing the bit-reversal ordering inherent to the DIF-FFT algorithm.

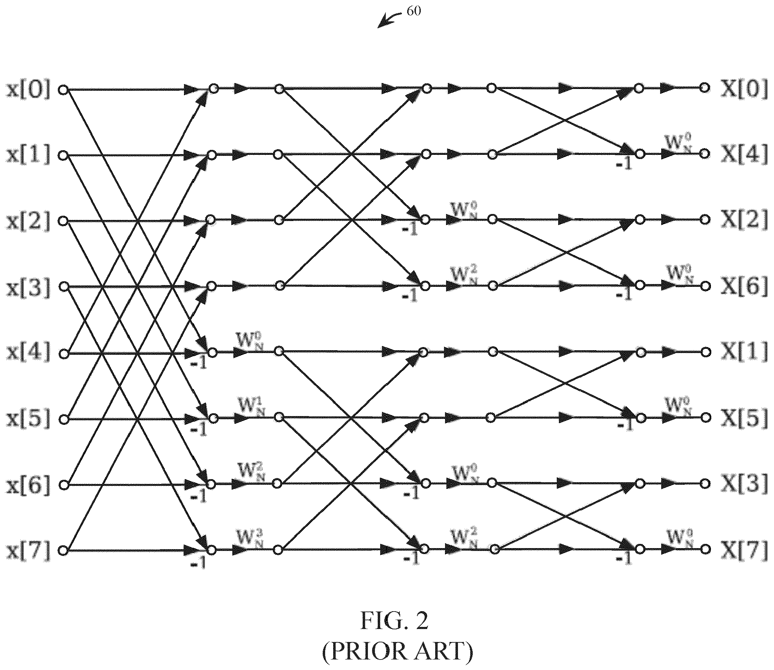

FIG. 2 is a flowchart representation of an FFT operation 60, as well known in the art. With reference to equations [1] an [2] above, the FFT of FIG. 2 includes three stages of butterfly operations. In one example x[0] and x[4] respectively correspond to $x(n1)$ and $x(n2)$ of equations [1] and [2].

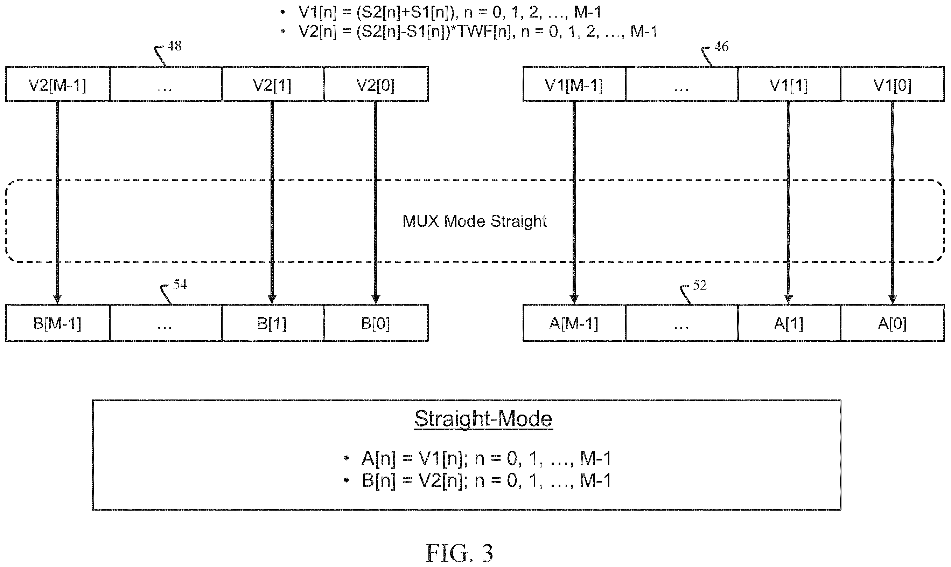

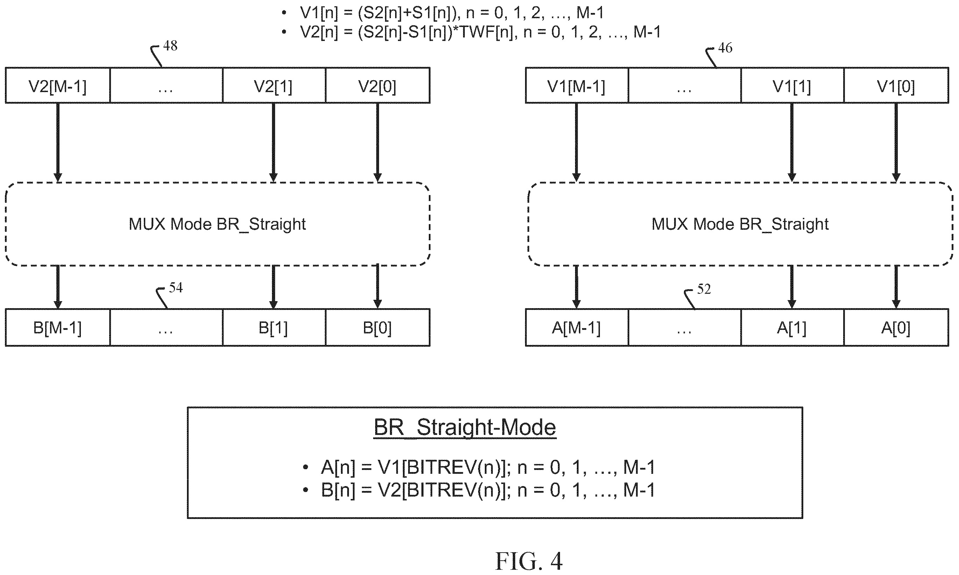

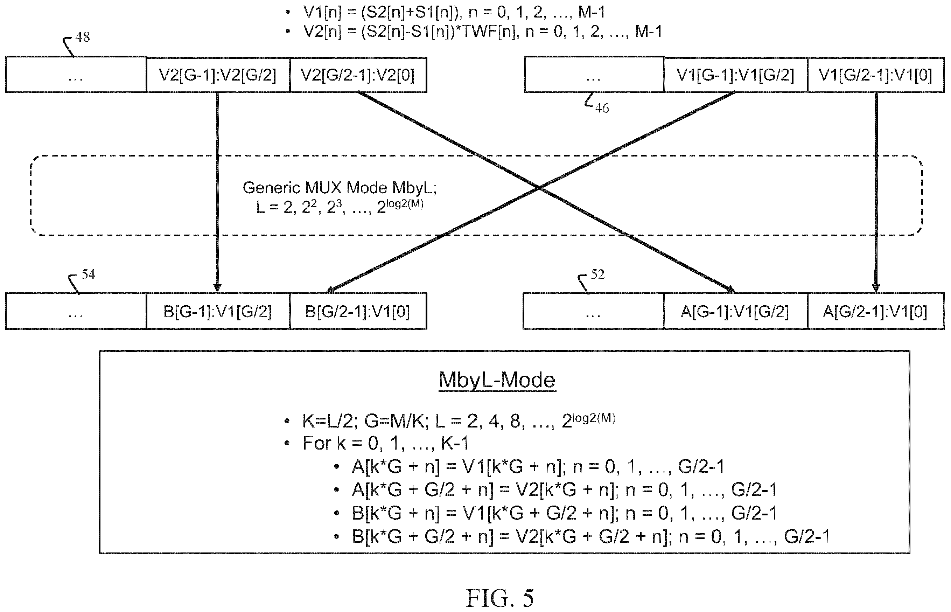

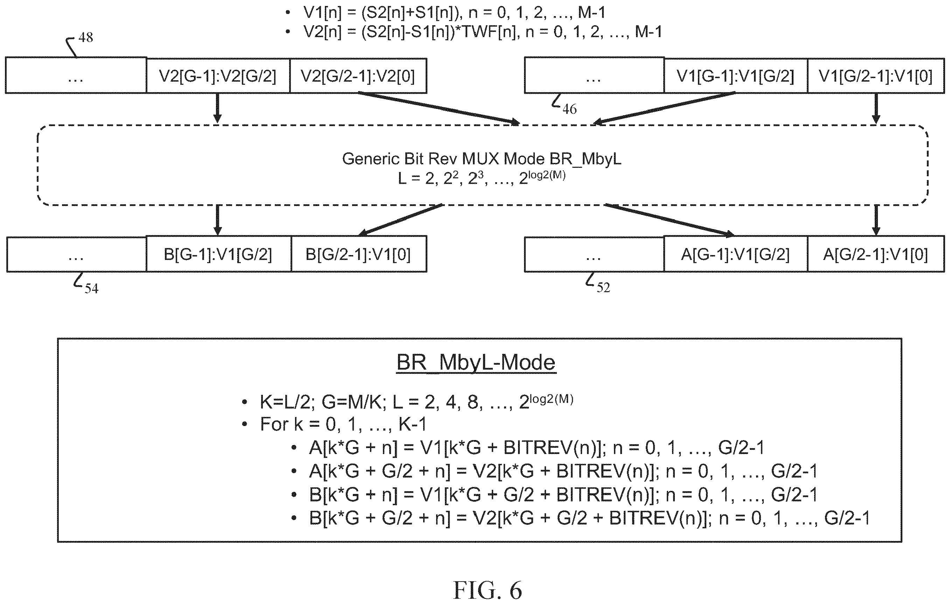

FIG. 3, FIG. 4, FIG. 5 and FIG. 6 show graphical views of the MUX modes Straight-Mode, BR_Straight-Mode, MbyL-Mode and BR_MbyL-Mode respectively. With ongoing reference to FIG. 1, the Straight-Mode of FIG. 3 is applied by V MUX 50 to permute vectors V1 46 and V2 48 into linearized vectors A 52 and B 54. The Straight-Mode is also used as a pass-through mode for S1 MUX 22 AND S2 MUX 32 without reordering elements. When applied to the S1 MUX 22, the depiction of V1 and A in FIG. 3 is substituted with the S1 Line Buffer 20 and S1 24 (or in some embodiments the Type Conversion 26) respectively. When applied to the S2 MUX 32, the depiction of V2 and B in FIG. 3 is substituted with the S2 Line Buffer 30 and S2 34 (or in some embodiments the Type Conversion 36) respectively. The MUX modes shown in FIG. 4, FIG. 5 and FIG. 6 are used exclusively with the V MUX 50. The MUX mode shown in FIG. 4 is a bit reversed version of the MUX mode shown in FIG. 3. Similarly, the MUX mode shown in FIG. 6 is a bit reversed version of the MUX mode shown in FIG. 5. The MUX modes of FIG. 5 and FIG. 6 are scalable with the vector width M. For example, using a SIMD processor with M=32, there are five possible modes given by 32by2, 32by4, 32by8, 32by16 and 32by32.

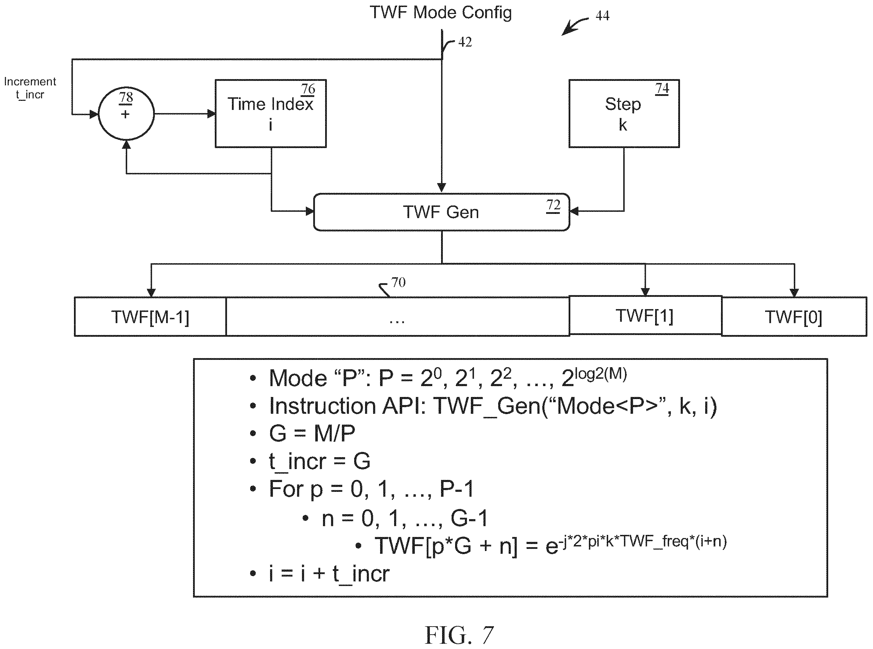

FIG. 7 shows further details of an embodiment of the SAU-TWF 44 controlled by the TWF Modes 42. The SAU-TWF 44 generates TWF 70 with a TWF Gen generator 72, indexed by Step "k" 74, a Time Index "i" 76 and an adder circuit 78. Accordingly, log2(M) twiddle factor generation modes may be realized. The TWF modes 42 are generated to match the bit reordering performed by the system 10 of FIG. 1.

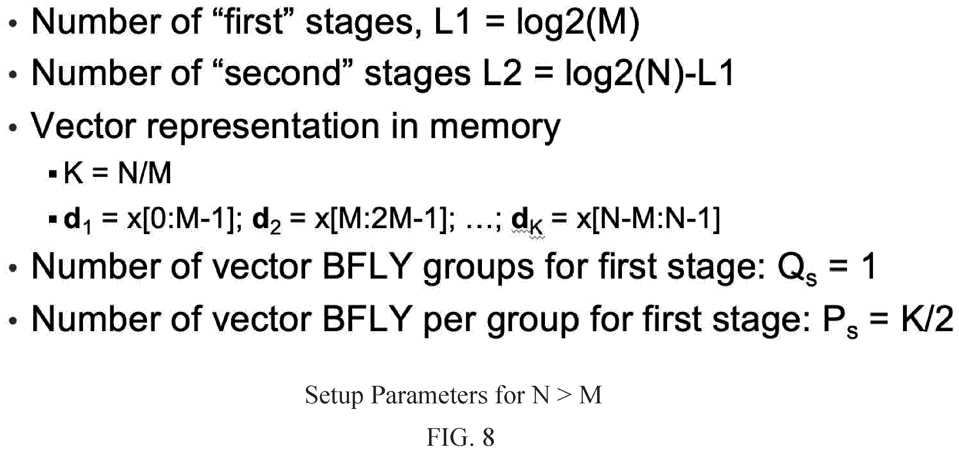

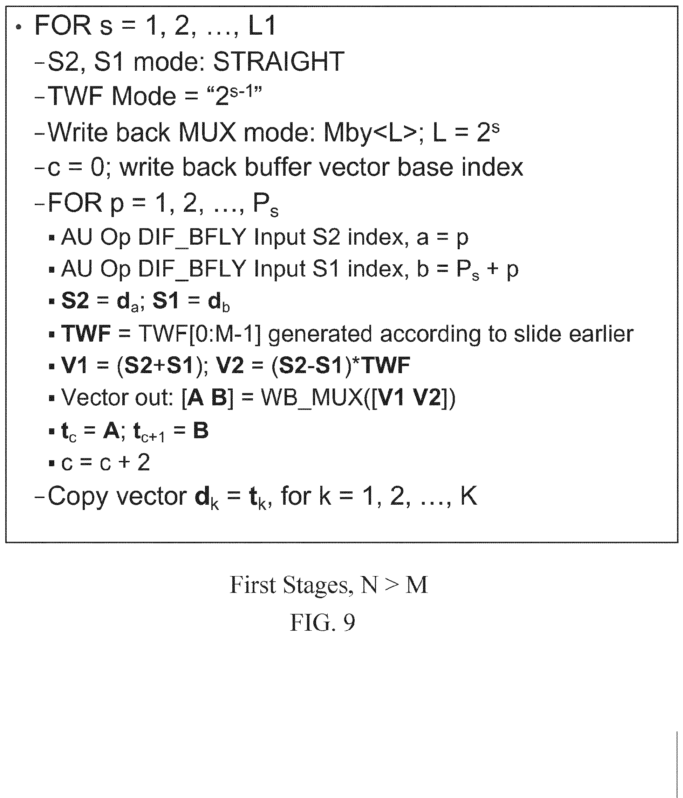

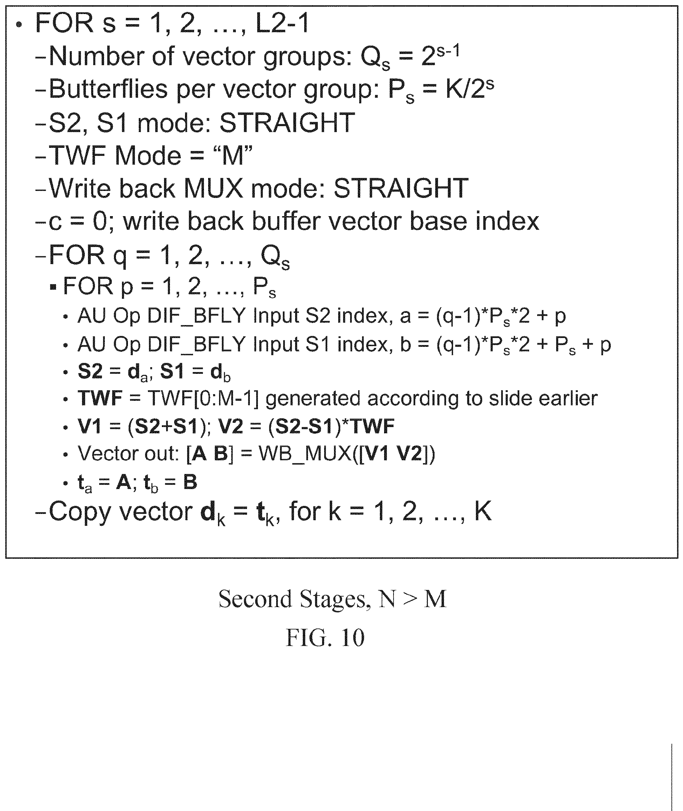

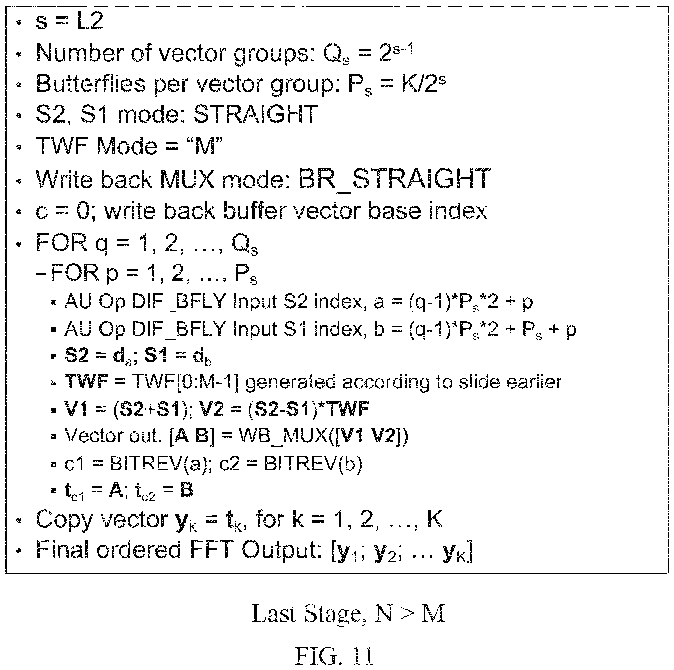

FIG. 8 shows the initial setup parameters for a method for self-ordering FFT as further described in FIG. 9, FIG. 10 and FIG. 11 for the case where N is greater than M. FIG. 9, FIG. 10 and FIG. 11 describe methods for operating the system of FIG. 1 for first stages, second stages and a last stage respectively, where N is greater than M. The first stages and second stages are defined by L1 and L2 in accordance with FIG. 8. The input data stream "x( )" to the N-point FFT may be partitioned into N/M contiguous vectors where each vector consists of M contiguous elements. The parameter "d" represents the N/M vectors that "x()" is partitioned into. For each method of FIG. 9, FIG. 10 and FIG. 11, the MUX mode used by the S1 MUX 22 and the S2 MUX 32 is the Straight-Mode as shown in FIG. 3. The write back modes used by the V MUX 50 for FIG. 9, FIG. 10 and FIG. 11 are the MbyL-Mode of FIG. 5, the Straight-Mode of FIG. 3 and the BR_Straight-Mode of FIG. 4 respectively.

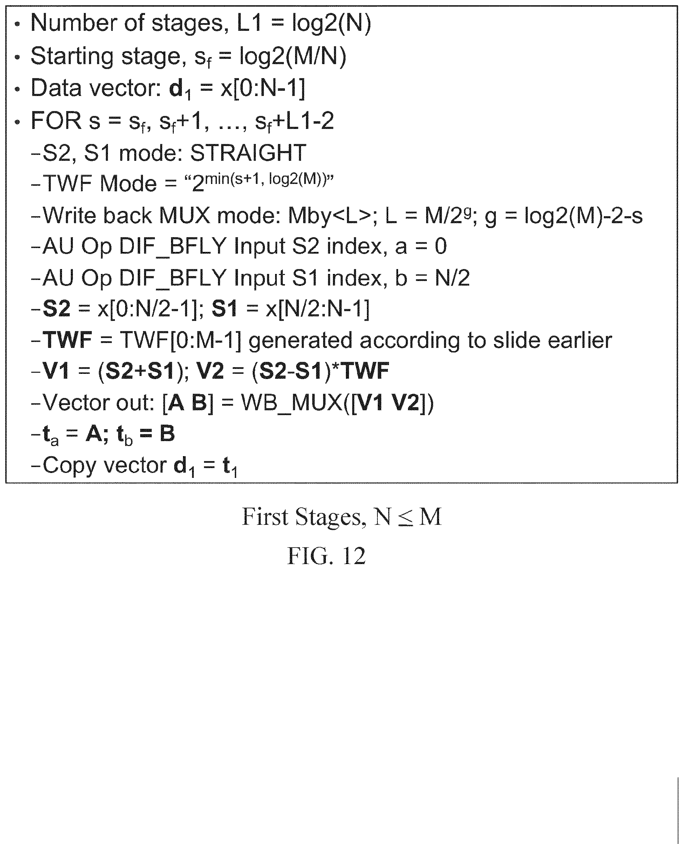

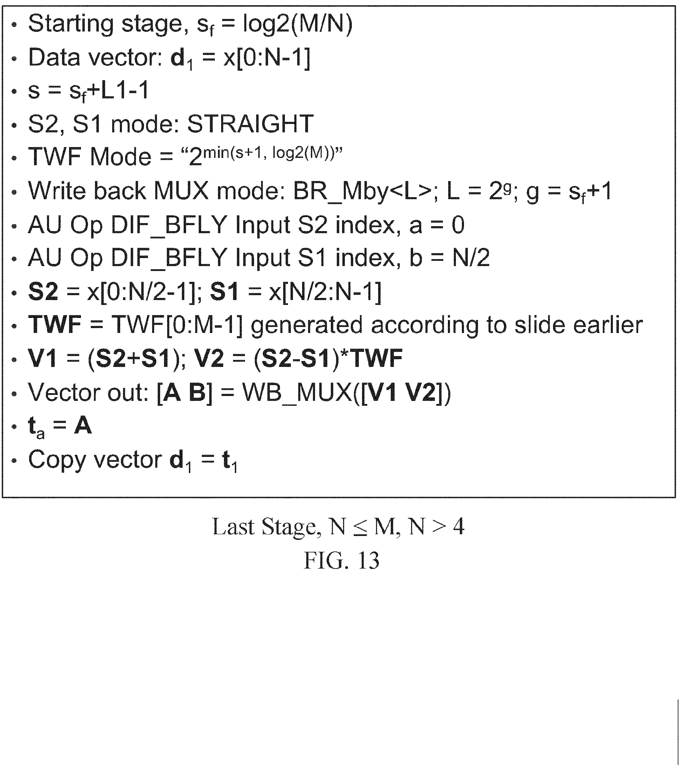

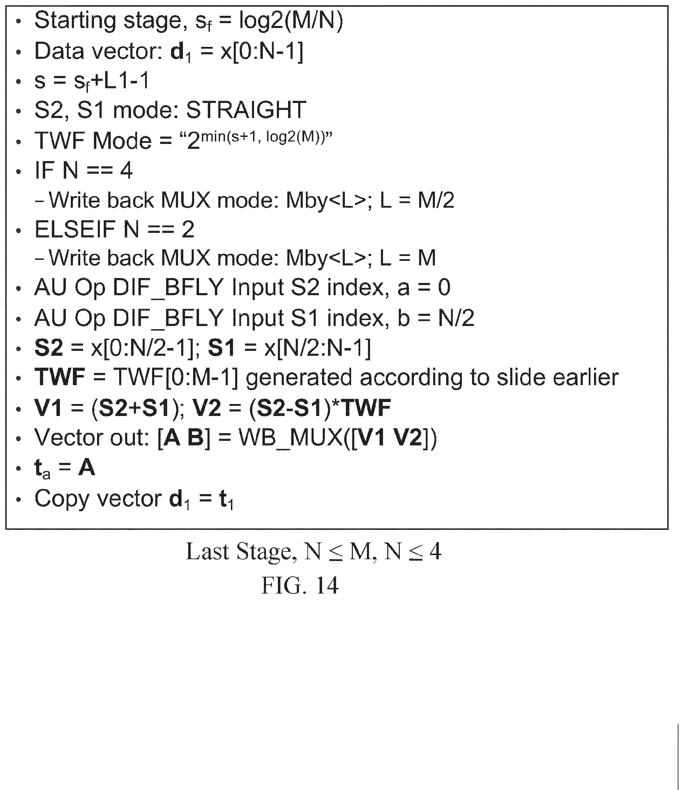

FIG. 12 describes a method for operating the system of FIG. 1 for first stages wherein N is less than or equal to M. FIG. 13 describes a method for operating the system of FIG. 1 for a stage wherein N is less than or equal to M, and N is greater than 4. FIG. 14 describes a method for operating the system of FIG. 1 for a stage wherein N is less than or equal to M, and N is less than or equal to 4. Similar to FIG. 9, FIG. 10 and FIG. 11, the input data stream "x( )" to the N-point FFT may be partitioned into N/M contiguous vectors where each vector consists of M contiguous elements. The parameter "d" represents the N/M vectors that "x()" is partitioned into. For each method of FIG. 12, FIG. 13 and FIG. 14, the MUX mode used by the S1 MUX 22 and the S2 MUX 32 is the Straight-Mode as shown in FIG. 3. The write back modes used by the V MUX 50 for FIG. 12, FIG. 13 and FIG. 14 are the MbyL-Mode of FIG. 5, the BR_MbyL-Mode of FIG. 6 and the MbyL-Mode of FIG. 5 respectively.

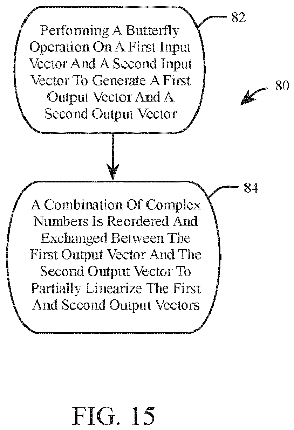

FIG. 15 shows an embodiment 80 of a method for self-ordering FFT for SIMD engines. With continued reference to FIG. 1, at 82 a butterfly operation is performed on first input vector and a second input vector (from S1 24 and S2 34) to generate a first output vector V1 46 and a second output vector V2 48. At 84, a combination of complex numbers is reordered and exchanged (with the V Mux 50) between the first output vector 46 and the second output vector 48 to partially linearize the first order of the first output vector 46 and the second output vector 48. Accordingly, some complex numbers from the first output vector 46 are moved to, and reordered with, the second output vector 48, and some complex numbers from the second output vector 48 are moved to, and reordered with, the first output vector 46, thereby performing an intra-vector permutation.

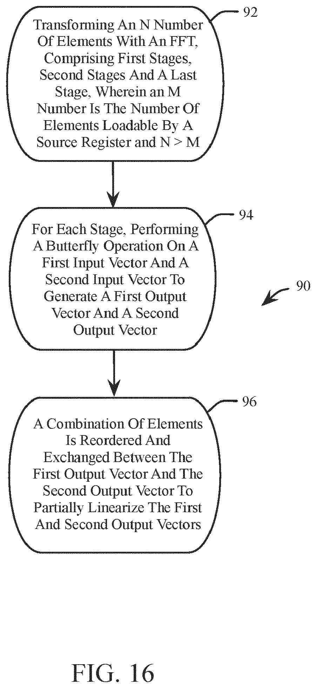

FIG. 16 shows an embodiment 90 of a method for self-ordering FFT for SIMD engines. With continued reference to FIG. 1, at 92 an N number of elements is transformed with an FFT, wherein N is greater than M (e.g., using the methods shown in FIG. 9 to FIG. 11). At 94, for each stage of the FFT, a butterfly operation is performed on a first input vector and a second input vector (from S1 24 and S2 34) to generate a first output vector V 146 and a second output vector V2 48. At 96, a combination of elements is reordered and exchanged (with the V Mux 50) between the first output vector 46 and the second output vector 48 to partially linearize the first order of the first output vector 46 and the second output vector 48.

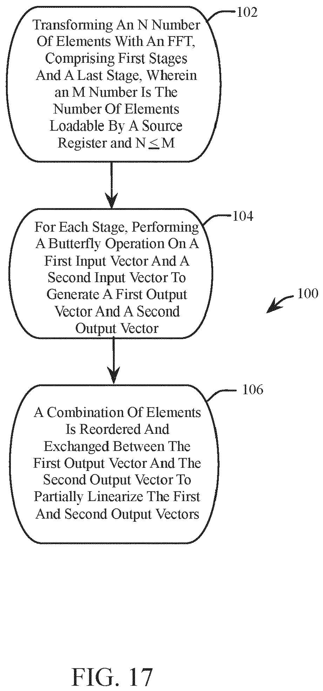

FIG. 17 shows an embodiment 100 of a method for self-ordering FFT for SIMD engines. With continued reference to FIG. 1, at 102 an N number of elements is transformed with an FFT, wherein N is less than or equal to M (e.g., using the methods shown in FIG. 12 to FIG. 14). At 104, for each stage of the FFT, a butterfly operation is performed on a first input vector and a second input vector (from S1 24 and S2 34) to generate a first output vector V 146 and a second output vector V2 48. At 106, a combination of elements is reordered and exchanged (with the V Mux 50) between the first output vector 46 and the second output vector 48 to partially linearize the first order of the first output vector 46 and the second output vector 48.

As will be appreciated, at least some of the embodiments as disclosed include at least the following. In one embodiment, a method for self-ordering Fast Fourier Transform (FFT) for Single Instruction Multiple Data engines comprises performing a butterfly operation on a first input vector and a second input vector to generate a first output vector and a second output vector, wherein the first input vector, the second input vector, the first output vector and the second output vector are each comprised of complex numbers, and a first order of the complex numbers of the first output vector is non-linear and a second order of the complex numbers of the second output vector is non-linear. A combination of complex numbers is reordered and exchanged between the first output vector and the second output vector to partially linearize the first order of the first output vector and to partially linearize the second order of the second output vector. The method represents a solution to the problem of how to provide the automatic undoing of the bit-reversed ordering of the FFT by enabling incremental intra-vector permutations at each stage of an FFT thereby avoiding the need for accessing a vector memory in sets of non-contiguous elements at any stage of the FFT operation.

Alternative embodiments of the method for self-ordering Fast Fourier Transform (FFT) for Single Instruction Multiple Data engines include one of the following features, or any combination thereof. The first output vector is written back to a first storage and the second output vector is written back to a second storage. A first data type of the first output vector is converted before writing back to the first storage and a second data type of the second output vector is converted before writing back to the second storage. The first order and the second order are both linear in a final stage of the FFT, the butterfly operation performed for each of a plurality of stages of the FFT. The butterfly operation is performed on each one of a plurality of stages of a Decimation-In-Frequency FFT. At least one complex number of the second input vector is modified with a twiddle factor. The first output vector generated by the butterfly operation comprises adding each one of the complex numbers of the first input vector to a corresponding one of the complex numbers of the second input vector. The second output vector generated by the butterfly operation comprises subtracting each one of the complex numbers of the second input vector multiplied by a twiddle factor from a corresponding one of the complex numbers of the first input vector multiplied by the twiddle factor. The first source register is loaded with complex numbers of the first input vector received from a first multiplexer, the first multiplexer configured to multiplex a subset of a line of complex numbers received from a line buffer. A data type of the complex numbers of the first input vector is converted before loading the first source register.

In another embodiment, a method for self-ordering Fast Fourier Transform (FFT) for Single Instruction Multiple Data engines comprises transforming an N number of elements comprising first input elements and second input elements with an FFT comprising a plurality of stages, wherein the plurality of stages comprises at least one first stage, at least one second stage and a final stage, and wherein the N number is greater than an M number of a subset of the N number of elements loadable by each of a first storage and a second storage. For each stage, a butterfly operation is performed on a first input vector and a second input vector to generate a first output vector and a second output vector, wherein the first input vector is comprised of the first input elements, the second input vector is comprised of the second input elements, the first output vector is comprised of first output elements and the second output vector is comprised of second output elements, and a first order of the first output elements is non-linear and a second order of the second output elements is non-linear. A combination of elements is reordered and exchanged between the first output vector and the second output vector to partially linearize the first order of the first output vector and to partially linearize the second order of the second output vector. The method represents an alternative solution to the problem of how to provide the automatic undoing of the bit-reversed ordering of the FFT by enabling incremental intra-vector permutations at each stage of an FFT thereby avoiding the need for accessing a vector memory in sets of non-contiguous elements at any stage of the FFT operation.

Alternative embodiments of the method for self-ordering Fast Fourier Transform (FFT) for Single Instruction Multiple Data engines include one of the following features, or any combination thereof. The FFT is a Decimation-In-Frequency FFT. The plurality of stages comprises a first stage, the first output vector and the second output vector each partially linearized by a multiplexing mode comprising a Straight-Mode and written back to the respective first storage and second storage with an MbyL-Mode. The plurality of stages comprises a second stage, the first output vector and the second output vector each partially linearized by a multiplexing mode comprising a Straight-Mode and written back to the respective first storage and second storage with the Straight-Mode. The plurality of stages comprises a last stage, the first output vector and the second output vector each linearized by a multiplexing mode comprising a Straight-Mode and written back to the respective first storage and second storage with a BR_Straight-Mode.

In another embodiment, a method for self-ordering Fast Fourier Transform (FFT) for Single Instruction Multiple Data engines comprises transforming an N number of elements comprising first input elements and second input elements with an FFT comprising a plurality of stages, wherein the plurality of stages comprises at least one first stage and a final stage, and wherein the N number is less than or equal to an M number of a subset of the N number of elements loadable by each of a first storage and a second storage. For each stage, a butterfly operation is performed on a first input vector and a second input vector to generate a first output vector and a second output vector, wherein the first input vector is comprised of the first input elements, the second input vector is comprised of the second input elements, the first output vector is comprised of first output elements and the second output vector is comprised of second output elements, and a first order of the first output elements is non-linear and a second order of the second output elements is non-linear. A combination of elements is reordered and exchanged between the first output vector and the second output vector to partially linearize the first order of the first output vector and to partially linearize the second order of the second output vector. The method represents an alternative solution to the problem of how to provide the automatic undoing of the bit-reversed ordering of the FFT by enabling incremental intra-vector permutations at each stage of an FFT thereby avoiding the need for accessing a vector memory in sets of non-contiguous elements at any stage of the FFT operation.

Alternative embodiments of the method for self-ordering Fast Fourier Transform (FFT) for Single Instruction Multiple Data engines include one of the following features, or any combination thereof. The FFT is a Decimation-In-Frequency FFT. The plurality of stages comprises a first stage, the first output vector and the second output vector each partially linearized by a multiplexing mode comprising a Straight-Mode and written back to the respective first storage and second storage with an MbyL-Mode. The plurality of stages comprises a last stage and the N number is greater than 4, the first output vector and the second output vector each linearized by a multiplexing mode comprising a Straight-Mode, and written back to the respective first storage and second storage with a BR_MbyL-Mode. The plurality of stages comprises a last stage and the N number is less than or equal to 4, the first output vector and the second output vector each linearized by a multiplexing mode comprising a Straight-Mode, and written back to the respective first storage and second storage with an MbyL-Mode.

Although the invention is described herein with reference to specific embodiments, various modifications and changes can be made without departing from the scope of the present invention as set forth in the claims below. Accordingly, the specification and figures are to be regarded in an illustrative rather than a restrictive sense, and all such modifications are intended to be included within the scope of the present invention. Any benefits, advantages, or solutions to problems that are described herein with regard to specific embodiments are not intended to be construed as a critical, required, or essential feature or element of any or all the claims.

Unless stated otherwise, terms such as "first" and "second" are used to arbitrarily distinguish between the elements such terms describe. Thus, these terms are not necessarily intended to indicate temporal or other prioritization of such elements.

**Claims**

1. A method for self-ordering Fast Fourier Transform (FFT) for Single Instruction Multiple Data engines comprising:

   performing a butterfly operation on a first input vector and a second input vector to generate a first output vector and a second output vector, wherein the first input vector, the second input vector, the first output vector and the second output vector are each comprised of complex numbers, and a first order of the complex numbers of the first output vector is non-linear and a second order of the complex numbers of the second output vector is non-linear; and
   reordering and exchanging a combination of complex numbers between the first output vector and the second output vector to partially linearize the first order of the first output vector and to partially linearize the second order of the second output vector.

2. The method of claim 1, further comprising writing back the first output vector to a first storage comprising the first input vector and writing back the second output vector to a second storage comprising the second input vector.

3. The method of claim 2, further comprising converting a first data type of the first output vector before writing back to the first storage and converting a second data type of the second output vector before writing back to the second storage.

4. The method of any preceding claim, wherein the first order and the second order are both linear in a final stage of the FFT, the butterfly operation performed for each of a plurality of stages of the FFT.

5. The method of any preceding claim, further comprising performing the butterfly operation on each one of a plurality of stages of a Decimation-In-Frequency FFT.

6. The method of any preceding claim, further comprising modifying at least one complex number of the second input vector with a twiddle factor.

7. The method of any preceding claim, wherein generating the first output vector by the butterfly operation comprises adding each one of the complex numbers of the first input vector to a corresponding one of the complex numbers of the second input vector.

8. The method of any preceding claim, wherein generating the second output vector by the butterfly operation comprises subtracting each one of the complex numbers of the second input vector multiplied by a twiddle factor from a corresponding one of the complex numbers of the first input vector multiplied by the twiddle factor.

9. The method of any preceding claim, further comprising loading the first source register with the complex numbers of the first input vector received from a first multiplexer, the first multiplexer configured to multiplex a subset of a line of complex numbers received from a line buffer.

10. The method of claim 9, further comprising converting a data type of the complex numbers of the first input vector before loading the first source register.

11. A method for self-ordering Fast Fourier Transform (FFT) for Single Instruction Multiple Data engines comprising:

transforming an N number of elements comprising first input elements and second input elements with an FFT comprising a plurality of stages, wherein the plurality of stages comprises at least one first stage, at least one second stage and a final stage, and wherein the N number is greater than an M number of a subset of the N number of elements loadable by each of a first storage and a second storage;
performing for each stage, a butterfly operation on a first input vector and a second input vector to generate a first output vector and a second output vector, wherein the first input vector is comprised of the first input elements, the second input vector is comprised of the second input elements, the first output vector is comprised of first output elements and the second output vector is comprised of second output elements, and a first order of the first output elements is non-linear and a second order of the second output elements is non-linear; and
reordering and exchanging a combination of elements between the first output vector and the second output vector to partially linearize the first order of the first output vector and to partially linearize the second order of the second output vector.

12. The method of claim 11, wherein the FFT is a Decimation-In-Frequency FFT.

13. The method of claim 11 or 12, wherein the plurality of stages comprises a first stage, the first output vector and the second output vector each partially linearized by a multiplexing mode comprising a Straight-Mode and written back to the respective first storage and second storage with an MbyL-Mode.

14. The method of any one of claims 11 to 13, wherein the plurality of stages comprises a second stage, the first output vector and the second output vector each partially linearized by a multiplexing mode comprising a Straight-Mode and written back to the respective first storage and second storage with the Straight-Mode.

15. The method of any one of claims 11 to 14, wherein the plurality of stages comprises a last stage, the first output vector and the second output vector each linearized by a multiplexing mode comprising a Straight-Mode and written back to the respective first storage and second storage with a BR_Straight-Mode.

EP 4 307 138 A1

```
                          ┌────────────────────────────────────────────────┐
                          │         Tightly Coupled Memory        12        │
                          └────────────────────────────────────────────────┘
                                              ↕
┌──────────────────────────┐  ┌────────────────────────────────────────────┐  ┌──────────────────────────┐
│ Type Conversion    58    │→ │              Cache              14           │← │ Type Conversion    56    │
└──────────────────────────┘  └────────────────────────────────────────────┘  └──────────────────────────┘
                                    │                          │
                         ┌──────────────────────┐   ┌──────────────────────┐
                         │ S2 Line Buffer   30  │   │ S1 Line Buffer   20  │
                         └──────────────────────┘   └──────────────────────┘
                                    │                          │
                         ┌──────────────────┐       ┌──────────────────┐
                         │ S2 MUX      32   │       │ S1 MUX      22   │
                         └──────────────────┘       └──────────────────┘
                                    │                          │
                         ┌──────────────────┐  ┌──────────────────┐  ┌──────────────────┐
                         │ Type Conversion  │  │ TWF Mode    42   │  │ Type Conversion  │
                         │             36   │  └──────────────────┘  │             26   │
                         └──────────────────┘           │           └──────────────────┘
                                    │          ┌──────────────────┐            │
                         ┌──────────────────┐  │ SAU-TWF     44   │  ┌──────────────────┐
                         │ S2          34   │  └──────────────────┘  │ S1          24   │
                         └──────────────────┘           │           └──────────────────┘
                                    │          ┌──────────────────┐            │
                                    └────────→ │ DIF Bfly    40   │ ←──────────┘
                                               └──────────────────┘
                                                        │
                         ┌──────────────────┐       ┌──────────────────┐
                         │ V2          48   │       │ V1          46   │
                         └──────────────────┘       └──────────────────┘
                                    │          ┌──────────────────┐            │
                                    └────────→ │ V MUX       50   │ ←──────────┘
                                               └──────────────────┘
                                                        │
                         ┌──────────────────┐       ┌──────────────────┐
                         │ B           54   │       │ A           52   │
                         └──────────────────┘       └──────────────────┘
```

FIG. 1

FIG. 2
(PRIOR ART)

- $V1[n] = (S2[n]+S1[n])$, $n = 0, 1, 2, \ldots, M-1$
- $V2[n] = (S2[n]-S1[n])*TWF[n]$, $n = 0, 1, 2, \ldots, M-1$

48

| V2[M-1] | ... | V2[1] | V2[0] |

46

| V1[M-1] | ... | V1[1] | V1[0] |

MUX Mode Straight

54

| B[M-1] | ... | B[1] | B[0] |

52

| A[M-1] | ... | A[1] | A[0] |

### Straight-Mode

- $A[n] = V1[n]$; $n = 0, 1, \ldots, M-1$
- $B[n] = V2[n]$; $n = 0, 1, \ldots, M-1$

FIG. 3

EP 4 307 138 A1

- $V1[n] = (S2[n]+S1[n])$, n = 0, 1, 2, …, M-1
- $V2[n] = (S2[n]-S1[n])*TWF[n]$, n = 0, 1, 2, …, M-1

| V2[M-1] | … | V2[1] | V2[0] |
|---|---|---|---|

48

| V1[M-1] | … | V1[1] | V1[0] |
|---|---|---|---|

46

MUX Mode BR_Straight

MUX Mode BR_Straight

| B[M-1] | … | B[1] | B[0] |
|---|---|---|---|

54

| A[M-1] | … | A[1] | A[0] |
|---|---|---|---|

52

**BR_Straight-Mode**

- $A[n] = V1[BITREV(n)]$; n = 0, 1, …, M-1
- $B[n] = V2[BITREV(n)]$; n = 0, 1, …, M-1

FIG. 4

EP 4 307 138 A1

- $V1[n] = (S2[n]+S1[n])$, $n = 0, 1, 2, …, M-1$
- $V2[n] = (S2[n]-S1[n])*TWF[n]$, $n = 0, 1, 2, …, M-1$

48

| … | V2[G-1]:V2[G/2] | V2[G/2-1]:V2[0] |

| … | V1[G-1]:V1[G/2] | V1[G/2-1]:V1[0] |

46

Generic MUX Mode MbyL;
$L = 2, 2^2, 2^3, …, 2^{log2(M)}$

54

| … | B[G-1]:V1[G/2] | B[G/2-1]:V1[0] |

52

| … | A[G-1]:V1[G/2] | A[G/2-1]:V1[0] |

### MbyL-Mode

- $K=L/2$; $G=M/K$; $L = 2, 4, 8, …, 2^{log2(M)}$
- For $k = 0, 1, …, K-1$
  - $A[k*G + n] = V1[k*G + n]$; $n = 0, 1, …, G/2-1$
  - $A[k*G + G/2 + n] = V2[k*G + n]$; $n = 0, 1, …, G/2-1$
  - $B[k*G + n] = V1[k*G + G/2 + n]$; $n = 0, 1, …, G/2-1$
  - $B[k*G + G/2 + n] = V2[k*G + G/2 + n]$; $n = 0, 1, …, G/2-1$

FIG. 5

- $V1[n] = (S2[n]+S1[n])$, $n = 0, 1, 2, \ldots, M-1$
- $V2[n] = (S2[n]-S1[n])*TWF[n]$, $n = 0, 1, 2, \ldots, M-1$

| ... | V2[G-1]:V2[G/2] | V2[G/2-1]:V2[0] |
|---|---|---|

| ... | V1[G-1]:V1[G/2] | V1[G/2-1]:V1[0] |
|---|---|---|

Generic Bit Rev MUX Mode BR_MbyL
$L = 2, 2^2, 2^3, \ldots, 2^{\log2(M)}$

| ... | B[G-1]:V1[G/2] | B[G/2-1]:V1[0] |
|---|---|---|

| ... | A[G-1]:V1[G/2] | A[G/2-1]:V1[0] |
|---|---|---|

### BR_MbyL-Mode

- $K=L/2$; $G=M/K$; $L = 2, 4, 8, \ldots, 2^{\log2(M)}$
- For $k = 0, 1, \ldots, K-1$
  - $A[k*G + n] = V1[k*G + BITREV(n)]$; $n = 0, 1, \ldots, G/2-1$
  - $A[k*G + G/2 + n] = V2[k*G + BITREV(n)]$; $n = 0, 1, \ldots, G/2-1$
  - $B[k*G + n] = V1[k*G + G/2 + BITREV(n)]$; $n = 0, 1, \ldots, G/2-1$
  - $B[k*G + G/2 + n] = V2[k*G + G/2 + BITREV(n)]$; $n = 0, 1, \ldots, G/2-1$

FIG. 6

EP 4 307 138 A1

TWF Mode Config

44

42

Increment
t_incr

78
+

Time Index    76
i

Step    74
k

TWF Gen    72

70

| TWF[M-1] | ... | TWF[1] | TWF[0] |

- Mode "P": $P = 2^0, 2^1, 2^2, ..., 2^{log2(M)}$
- Instruction API: TWF_Gen("Mode<P>", k, i)
- $G = M/P$
- $t\_incr = G$
- For $p = 0, 1, ..., P-1$
  - $n = 0, 1, ..., G-1$
    - $TWF[p*G + n] = e^{-j*2*pi*k*TWF\_freq*(i+n)}$
- $i = i + t\_incr$

FIG. 7

- Number of "first" stages, L1 = log2(M)
- Number of "second" stages L2 = log2(N)-L1
- Vector representation in memory
  - K = N/M
  - $\mathbf{d}_1$ = x[0:M-1]; $\mathbf{d}_2$ = x[M:2M-1]; ...; $\mathbf{d}_K$ = x[N-M:N-1]
- Number of vector BFLY groups for first stage: $Q_s$ = 1
- Number of vector BFLY per group for first stage: $P_s$ = K/2

Setup Parameters for N > M

FIG. 8

EP 4 307 138 A1

- FOR s = 1, 2, …, L1
  - S2, S1 mode: STRAIGHT
  - TWF Mode = "$2^{s-1}$"
  - Write back MUX mode: Mby<L>; L = $2^s$
  - c = 0; write back buffer vector base index
  - FOR p = 1, 2, …, $P_s$
    - AU Op DIF_BFLY Input S2 index, a = p
    - AU Op DIF_BFLY Input S1 index, b = $P_s$ + p
    - **S2** = $\mathbf{d}_a$; **S1** = $\mathbf{d}_b$
    - **TWF** = TWF[0:M-1] generated according to slide earlier
    - **V1** = (**S2**+**S1**); **V2** = (**S2**-**S1**)\***TWF**
    - Vector out: [**A B**] = WB_MUX([**V1 V2**])
    - $\mathbf{t}_c$ = **A**; $\mathbf{t}_{c+1}$ = **B**
    - c = c + 2
  - Copy vector $\mathbf{d}_k$ = $\mathbf{t}_k$, for k = 1, 2, …, K

First Stages, N > M

FIG. 9

- FOR s = 1, 2, …, L2-1
  - Number of vector groups: $Q_s = 2^{s-1}$
  - Butterflies per vector group: $P_s = K/2^s$
  - S2, S1 mode: STRAIGHT
  - TWF Mode = "M"
  - Write back MUX mode: STRAIGHT
  - c = 0; write back buffer vector base index
  - FOR q = 1, 2, …, $Q_s$
    - FOR p = 1, 2, …, $P_s$
      - AU Op DIF_BFLY Input S2 index, a = $(q-1)*P_s*2 + p$
      - AU Op DIF_BFLY Input S1 index, b = $(q-1)*P_s*2 + P_s + p$
      - **S2 = $d_a$; S1 = $d_b$**
      - **TWF** = TWF[0:M-1] generated according to slide earlier
      - **V1 = (S2+S1); V2 = (S2-S1)*TWF**
      - Vector out: **[A B]** = WB_MUX(**[V1 V2]**)
      - **$t_a$ = A; $t_b$ = B**
  - Copy vector **$d_k$ = $t_k$**, for k = 1, 2, …, K

Second Stages, N > M

FIG. 10

- s = L2
- Number of vector groups: $Q_s = 2^{s-1}$
- Butterflies per vector group: $P_s = K/2^s$
- S2, S1 mode: STRAIGHT
- TWF Mode = "M"
- Write back MUX mode: BR_STRAIGHT
- c = 0; write back buffer vector base index
- FOR q = 1, 2, …, $Q_s$
  - FOR p = 1, 2, …, $P_s$
    - AU Op DIF_BFLY Input S2 index, $a = (q-1)*P_s*2 + p$
    - AU Op DIF_BFLY Input S1 index, $b = (q-1)*P_s*2 + P_s + p$
    - **S2 = $d_a$; S1 = $d_b$**
    - **TWF** = TWF[0:M-1] generated according to slide earlier
    - **V1 = (S2+S1); V2 = (S2-S1)*TWF**
    - Vector out: [**A B**] = WB_MUX([**V1 V2**])
    - c1 = BITREV(a); c2 = BITREV(b)
    - **$t_{c1}$ = A; $t_{c2}$ = B**
- Copy vector $\mathbf{y}_k = \mathbf{t}_k$, for k = 1, 2, …, K
- Final ordered FFT Output: [$\mathbf{y}_1$; $\mathbf{y}_2$; … $\mathbf{y}_K$]

Last Stage, N > M

FIG. 11

- Number of stages, $L1 = \log2(N)$
- Starting stage, $s_f = \log2(M/N)$
- Data vector: $\mathbf{d}_1 = x[0{:}N{-}1]$
- FOR $s = s_f, s_f{+}1, \ldots, s_f{+}L1{-}2$
  - S2, S1 mode: STRAIGHT
  - TWF Mode $= \text{``}2^{\min(s+1,\,\log2(M))}\text{''}$
  - Write back MUX mode: Mby<L>; $L = M/2^g$; $g = \log2(M){-}2{-}s$
  - AU Op DIF_BFLY Input S2 index, $a = 0$
  - AU Op DIF_BFLY Input S1 index, $b = N/2$
  - **S2** $= x[0{:}N/2{-}1]$; **S1** $= x[N/2{:}N{-}1]$
  - **TWF** $=$ TWF$[0{:}M{-}1]$ generated according to slide earlier
  - **V1** $=$ **(S2+S1)**; **V2** $=$ **(S2-S1)*TWF**
  - Vector out: [**A B**] $=$ WB_MUX([**V1 V2**])
  - $\mathbf{t}_a = \mathbf{A}$; $\mathbf{t}_b = \mathbf{B}$
  - Copy vector $\mathbf{d}_1 = \mathbf{t}_1$

First Stages, $N \leq M$

FIG. 12

- Starting stage, $s_f = \log2(M/N)$
- Data vector: $\mathbf{d}_1 = x[0{:}N{-}1]$
- $s = s_f{+}L1{-}1$
- S2, S1 mode: STRAIGHT
- TWF Mode = "$2^{\min(s+1,\ \log2(M))}$"
- Write back MUX mode: BR_Mby<L>; $L = 2^g$; $g = s_f{+}1$
- AU Op DIF_BFLY Input S2 index, $a = 0$
- AU Op DIF_BFLY Input S1 index, $b = N/2$
- **S2** = $x[0{:}N/2{-}1]$; **S1** = $x[N/2{:}N{-}1]$
- **TWF** = TWF[0:M-1] generated according to slide earlier
- **V1** = (**S2**+**S1**); **V2** = (**S2**-**S1**)***TWF**
- Vector out: [**A B**] = WB_MUX([**V1 V2**])
- $\mathbf{t}_a = \mathbf{A}$
- Copy vector $\mathbf{d}_1 = \mathbf{t}_1$

Last Stage, $N \leq M$, $N > 4$

FIG. 13

- Starting stage, $s_f = \log2(M/N)$
- Data vector: $\mathbf{d}_1 = x[0{:}N{-}1]$
- $s = s_f + L1 - 1$
- S2, S1 mode: STRAIGHT
- TWF Mode = "$2^{\min(s+1,\ \log2(M))}$"
- IF N == 4
  - Write back MUX mode: Mby<L>; L = M/2
- ELSEIF N == 2
  - Write back MUX mode: Mby<L>; L = M
- AU Op DIF_BFLY Input S2 index, a = 0
- AU Op DIF_BFLY Input S1 index, b = N/2
- **S2** = x[0:N/2-1]; **S1** = x[N/2:N-1]
- **TWF** = TWF[0:M-1] generated according to slide earlier
- **V1** = (**S2**+**S1**); **V2** = (**S2**-**S1**)*__TWF__
- Vector out: [**A B**] = WB_MUX([**V1 V2**])
- $\mathbf{t}_a = \mathbf{A}$
- Copy vector $\mathbf{d}_1 = \mathbf{t}_1$

Last Stage, $N \leq M, N \leq 4$

FIG. 14

Performing A Butterfly
Operation On A First Input
Vector And A Second Input
Vector To Generate A First
Output Vector And A
Second Output Vector

— 82

← 80

A Combination Of Complex
Numbers Is Reordered And
Exchanged Between The
First Output Vector And The
Second Output Vector To
Partially Linearize The First
And Second Output Vectors

— 84

FIG. 15

Transforming An N Number
Of Elements With An FFT,
Comprising First Stages,
Second Stages And A Last
Stage, Wherein an M
Number Is The Number Of
Elements Loadable By A
Source Register and N > M

— 92

For Each Stage, Performing
A Butterfly Operation On A
First Input Vector And A
Second Input Vector To
Generate A First Output
Vector And A Second
Output Vector

— 94

← 90

A Combination Of Elements
Is Reordered And
Exchanged Between The
First Output Vector And The
Second Output Vector To
Partially Linearize The First
And Second Output Vectors

— 96

FIG. 16

Transforming An N Number Of Elements With An FFT, Comprising First Stages And A Last Stage, Wherein an M Number Is The Number Of Elements Loadable By A Source Register and $N \leq M$ — 102

For Each Stage, Performing A Butterfly Operation On A First Input Vector And A Second Input Vector To Generate A First Output Vector And A Second Output Vector — 104

— 100

A Combination Of Elements Is Reordered And Exchanged Between The First Output Vector And The Second Output Vector To Partially Linearize The First And Second Output Vectors — 106

FIG. 17

Europäisches
Patentamt

European
Patent Office

Office européen
des brevets

# EUROPEAN SEARCH REPORT

**Application Number**

EP 23 18 4654

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/106718 A1 (SHUM HOI L [HK] ET AL) 10 May 2007 (2007-05-10) * paragraph [0022] - paragraph [0029]; figures 4, 7A-7C, 9 * | 1-15 | INV. G06F17/14 G06F9/38 |
| A | US 2010/241824 A1 (CARLSON DAVID G [US] ET AL) 23 September 2010 (2010-09-23) * figures 4-6 * | 1-15 | |
| A | US 7 197 625 B1 (VAN HOOK TIMOTHY J [US] ET AL) 27 March 2007 (2007-03-27) * figures 4, 8A-H, 10A-H * | 1-15 | |
| A | US 2011/107060 A1 (MCALLISTER JEFFREY S [US] ET AL) 5 May 2011 (2011-05-05) * figures 2-7 * | 1-15 | |

TECHNICAL FIELDS SEARCHED (IPC)

G06F

The present search report has been drawn up for all claims

| Place of search | Date of completion of the search | Examiner |
|---|---|---|
| Berlin | 4 December 2023 | Virnik, Elena |

EPO FORM 1503 03.82 (P04C01)

## ANNEX TO THE EUROPEAN SEARCH REPORT
## ON EUROPEAN PATENT APPLICATION NO.

EP 23 18 4654

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2023

| Patent document cited in search report | Publication date | Patent family member(s) | Publication date |
|---|---|---|---|
| US 2007106718 A1 | 10-05-2007 | NONE | |
| US 2010241824 A1 | 23-09-2010 | US 2010241824 A1<br>WO 2010105887 A2 | 23-09-2010<br>23-09-2010 |
| US 7197625 B1 | 27-03-2007 | US 7197625 B1<br>US 2007250683 A1<br>US 2011055497 A1 | 27-03-2007<br>25-10-2007<br>03-03-2011 |
| US 2011107060 A1 | 05-05-2011 | CN 102053948 A<br>JP 5689282 B2<br>JP 2011100452 A<br>KR 20110079495 A<br>US 2011107060 A1 | 11-05-2011<br>25-03-2015<br>19-05-2011<br>07-07-2011<br>05-05-2011 |

EPO FORM P0459

For more details about this annex : see Official Journal of the European Patent Office, No. 12/82